# EUROPEAN PATENT APPLICATION

(11) **EP 2 706 530 A2**
(43) Date of publication of application: **12.03.2014**
(21) Application number: 13180914.7
(22) Date of filing: 19.08.2013
(51) Int. Cl.: G11B 23/03, G11B 23/34, G11B 23/28, G11B 20/00, G11B 15/675, G11B 17/049, G11B 17/22

(54) **Medium processing method and cassette**

(30) Priority: 11.09.2012 JP 2012199976
(71) Applicant: Kabushiki Kaisha Toshiba, Tokyo 105-8001 (JP)
(72) Inventor: Kuroda, Sumio, Tokyo, 105-8001 (JP); Shimomura, Kazuhito, Tokyo, 105-8001 (JP); Sakai, Yuji, Tokyo, 105-8001 (JP); Suzuki, Kenichiro, Tokyo, 105-8001 (JP)
(74) Representative: Henkel, Breuer & Partner

(57) **Abstract**

According to one embodiment, a medium processing method includes first reading (BLOCK 14), second reading (BLOCK 12), and determining (BLOCK 15). The first reading is configured to read first medium identification information and cassette identification information which are stored in a first medium contained in a cassette. The second reading is configured to read cassette information from the cassette. The determining is configured to determine a cassette contained medium formed of the cassette and the medium as authentic, when the cassette information includes the first medium identification information and the cassette identification information.

## Description

Embodiments described herein relate generally to a medium processing method and cassette.

In recent years, the importance of compliance for corporations and the like has increased, and there is an increasing demand for storing non-falsified original data such as accounting material and medical records of hospitals. Write-once optical discs are comparatively suitable media for the above purpose, since they can store data only once. It is possible to perform fraudulent behavior even for write-once optical discs, however, such as changing an optical disc which stores original correct data for an optical disc which stores falsified data.

In addition, for rewritable optical discs, there is higher possibility that data stored in the optical disc is falsified.

There is a demand for a technique for safely managing original data which are not falsified.

A general architecture that implements the various features of the embodiments will now be described with reference to the drawings. The drawings and the associated descriptions are provided to illustrate the embodiments and not to limit the scope of the invention.

FIG. 1 is a diagram illustrating an example of a cassette which is applied to a storage device according to an embodiment.

FIG. 2 is a diagram illustrating an example of a state in which an upper cover of the cassette which is applied to the storage device according to the embodiment is opened.

FIG. 3 is a flowchart illustrating a first example of medium processing according to the embodiment.

FIG. 4 is a flowchart illustrating a second example of the medium processing according to the embodiment.

FIG. 5 is a flowchart illustrating a third example of the medium processing according to the embodiment.

FIG. 6 is a diagram illustrating an example of a format of RFID according to the embodiment.

FIG. 7 is a diagram illustrating a first example of a cassette ID and a disc ID which are stored in the RFID according to the embodiment.

FIG. 8 is a diagram illustrating a second example of the cassette ID and the disc ID which are stored in the RFID according to the embodiment.

FIG. 9 is a diagram illustrating an example of an information processing system according to the embodiment.

FIG. 10 is a block diagram illustrating an example of flow of recording processing of the information processing system according to the embodiment.

FIG. 11 is a block diagram illustrating a schematic structure of the information processing system according to the embodiment.

FIG. 12 is a diagram illustrating an example of division recording performed by the information processing system according to the embodiment.

Various embodiments will be described hereinafter with reference to the accompanying drawings.

In general, according to one embodiment, a medium processing method includes first reading, second reading, and determining. The first reading is configured to read first medium identification information and cassette identification information which are stored in a first medium contained in a cassette. The second reading is configured to read cassette information from the cassette. The determining is configured to determine a cassette contained medium formed of the cassette and the medium as authentic, when the cassette information includes the first medium identification information and the cassette identification information.

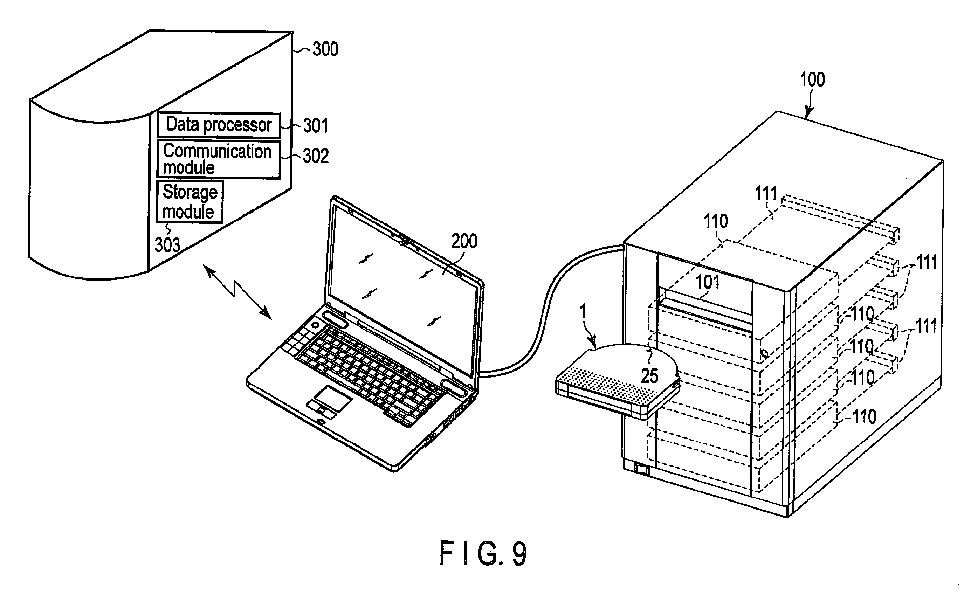

FIG. 9 is a diagram illustrating an example of an information processing system according to the embodiment. As illustrated in FIG. 9, the information processing system comprises a storage device 100 and a computer 200. The storage device 100 is formed of a plurality of optical disc drives which are connected in parallel. For example, the storage device 100 is formed of five BD-R drives which are connected in parallel. Although the embodiment shows the case of adopting five BD-R drives which are connected in parallel, various media can be adopted as the recording media (information storage media), as well as BD-R. As the recording media, it is possible to adopt various media, such as optical discs, magnetic disks, and flash memories. Although the case of using write-once media will be mainly explained hereinafter, the present embodiment is not limited to write-once media. For example, the medium processing explained in the present embodiment can also be applied to rewritable media.

When the storage device 100 is connected to the computer 200, dedicated drivers (Driver Top, Driver Bottom) are installed in the five BD-R drives connected in parallel. Thereby, the storage device 100 makes the five BD-R drives (five BD-R media) appear to be one storage device of large capacity, like RAID in the case of HDDs. Thereby, the computer 200 treats the five BD-R drives of the storage device 100 as one large-capacity storage.

In the storage device 100, five disc drives 110 are arranged in a line in a vertical direction. A slot 101, into which a cassette 1 is inserted, is opened in a position which is higher than the uppermost disc drive 110. A tray 111 of each disc drive 110 is pulled out to a side opposite to a side on which the slot 101 is opened, that is, to the rear supposing that the side on which the slot 101 is opened is the front. When the cassette 1 is inserted through the slot 101, a plurality of optical discs which are taken out of the cassette 1 are put into the respective disc drives 110, by a carrier mechanism included in the storage device 100.

When the storage device 100 receives data which is outputted from the computer 200 or the like together with a recording command, the storage device 100 divides the data and causes the disc drives to record the divided data items on the optical discs in parallel. In the same manner, when the storage device 100 receives a reading command from the host computer, the storage device 100 causes the disc drives 110 to read the divided data items which are recorded on the respective optical discs, combines the divided data items into one data, and outputs the data to the computer 200. When the cassette 1 is taken out of the storage device 100, post-processing of recording is performed, and thereafter the carrier mechanism returns the optical discs to the cassette 1, and ejects the cassette 1 from the slot 101.

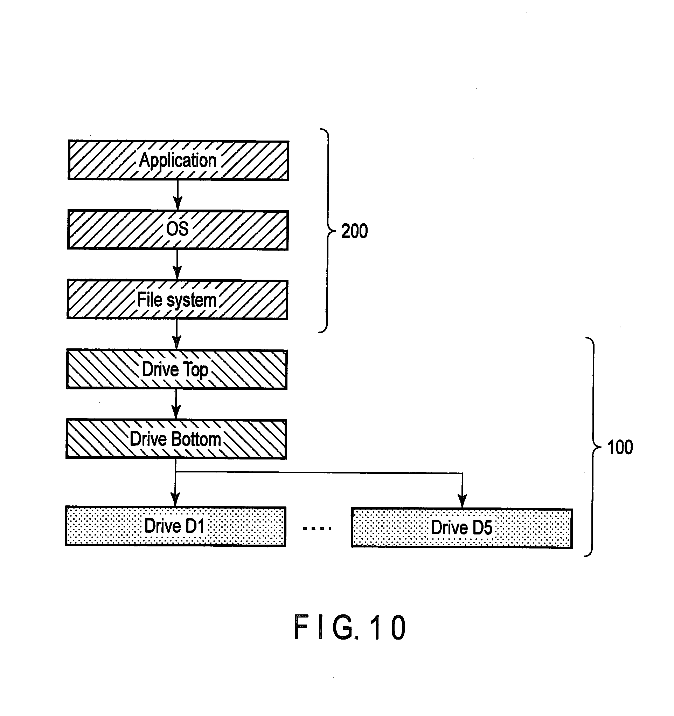

Next, supplementary explanation of the flow of the recording processing of the information processing system according to the embodiment will be made with reference to FIG. 10. FIG. 10 is a block diagram illustrating a schematic structure of the whole system including the computer 200 and the storage device 100. The computer 200 is formed of application software, an operating system (OS), and a file system. The storage device 100 is formed of the installed dedicated drivers (Driver Top, Driver Bottom), a drive D1, a drive D2, a drive D3, a drive D4, and a drive D5. Drive D1, a drive D2, a drive D3, a drive D4, and a drive D5 function as recording means and playback means.

In the application software, recording data to be recorded and a recording destination are designated. From the hierarchy upper than the dedicated drivers, that is, from the application software, the OS, and the file system, the recording destination appears to be one large-capacity storage device. Therefore, when recording data is transmitted from the application software, the OS, and/or the file system to the dedicated drivers, the recording destination which corresponds to the large-capacity storage device is shown, not recording destinations which correspond to the five drives D1 to D5. To actually record data in drives D1 to D5, it is necessary to perform processing of convert the recording destination and recording data which correspond to the large-capacity storage device into recording destinations and recording data items which correspond to drives D1 to D5. The conversion processing is performed by the dedicated drivers.

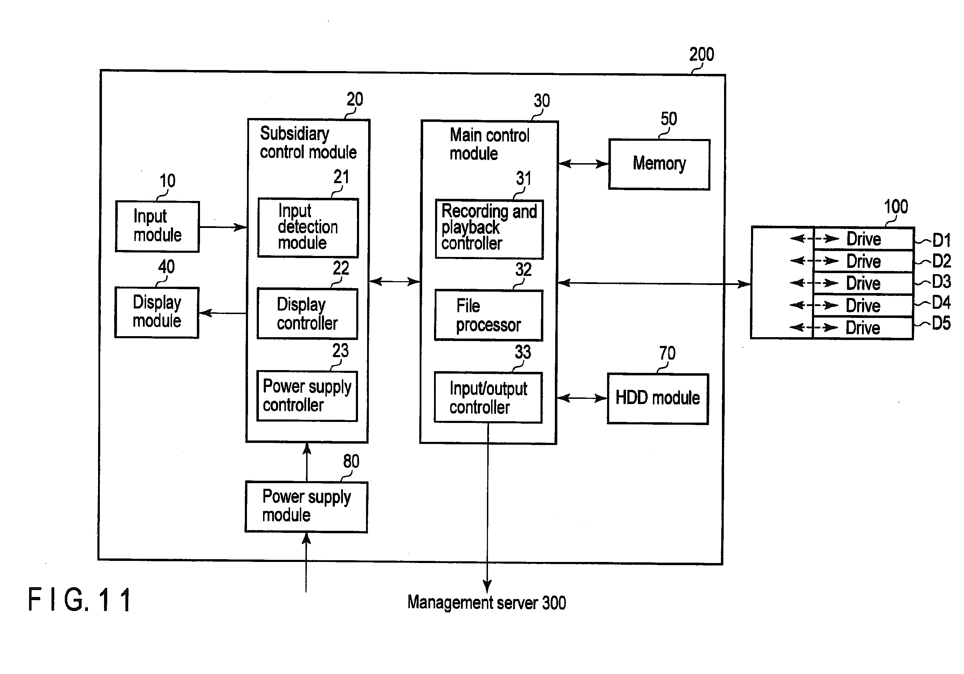

FIG. 11 is a block diagram illustrating a schematic configuration of the information processing system according to the embodiment. As described above, the information processing system is formed of the storage device 100 and the computer 200. The information processing system can record a plurality of files on respective recording media (a plurality of recording destinations) in parallel (simultaneous recording). The information processing system can also read a plurality of files from a plurality of recording media in parallel (simultaneous reading), and play back data based on the read files.

As illustrated in FIG. 11, the computer 200 of the information processing system comprises an input module 10, a subsidiary control module 20, a main control module (control means) 30, a display module 40, a memory 50, an HDD (hard disk drive) module 70, and a power supply module 80.

The subsidiary control module 20 includes an input detection module 21, a display controller 22, and a power supply controller 23. The main control module 30 (recording controller, playback controller, determining module) includes a recording and playback processor 31, a file processor 32, and an input/output controller 33. The main control module 30 transmits display data to be displayed by the display module 40 to the display controller 22. The display controller 22 controls the display module 40 based on the display data. Thereby, the display module 40 can display display information which corresponds to the display data.

For example, the input module 10 is provided with a power key, a recording key, and a playback key, and the like. The user can control operation of the information processing system by performing input operation for the input module 10.

The power key is a key configured to command turning on/off the information processing system. When the power key is pressed down, the input detection module 21 of the subsidiary control module 20 detects that the power key has been pressed down, and the power supply controller 23 of the subsidiary control module 20 commands the power supply module 80 to turn on/off the power. When the information processing system is in the power-off state, the power supply module 80 turns on the information processing system. When the information processing system is in the power-on state, the power supply module 80 turns off the information processing system.

The storage device 100 is formed of, for example, drive D1 (which corresponds to disc drive 110 in FIG. 9), drive D2 (which corresponds to disc drive 110 in FIG. 9), drive D3 (which corresponds to disc drive 110 in FIG. 9), drive D4 (which corresponds to disc drive 110 in FIG. 9), and drive D5 (which corresponds to disc drive 110 in FIG. 9). The storage device 100 can record data on five optical discs, and read data stored in five optical discs. For example, drives D1 to D5 process five optical discs which are contained in the cassette 1.

The present embodiment shows the case where the cassette 1 contains a plurality of (for example, five) optical discs, and a plurality of drives process the optical discs which have been taken out of the cassette 1. The present embodiment is, however, not limited to the above case. For example, the present embodiment also includes the case where the cassette 1 contains an optical disc, and one drive processes the optical disc which has been taken out of the cassette 1.

The input/output controller 33 receives one or a plurality of files provided from outside, and outputs the file(s) to, for example, the HDD drive module 70. Thereby, the HDD drive module 70 can record the file(s) provided from outside on the hard disk. The input/output controller 33 can also receive one or a plurality of files provided from outside, and output the file(s) to the storage device 100. Thereby, the storage device 100 can record one or a plurality of files provided from outside on one or a plurality of media. In addition, the input/output controller 33 can also receive one or a plurality of files stored in the hard disk, and output the file(s) to the storage device 100. Thereby, the storage device 100 can record one or a plurality of files stored in the hard disk on one or a plurality of media. The input/output controller 33 can also communicate with a server 300, to transmit and receive various information items.

The management server 300 includes a data processor 301, a communication module 302, and a storage module 303. The functions of the modules will be explained later in detail.

Next, an outline of information recording and playback performed by the information processing system will be explained hereinafter.

The information processing system almost uniformly divides one information data file into n (where n is an integer greater than 1) divided information data files which have almost the same size, generates a parity data file from the n divided information data files, and simultaneously records the n divided information data files and the parity data file on (n+1) portable discs of write-once read-many (WORM) type.

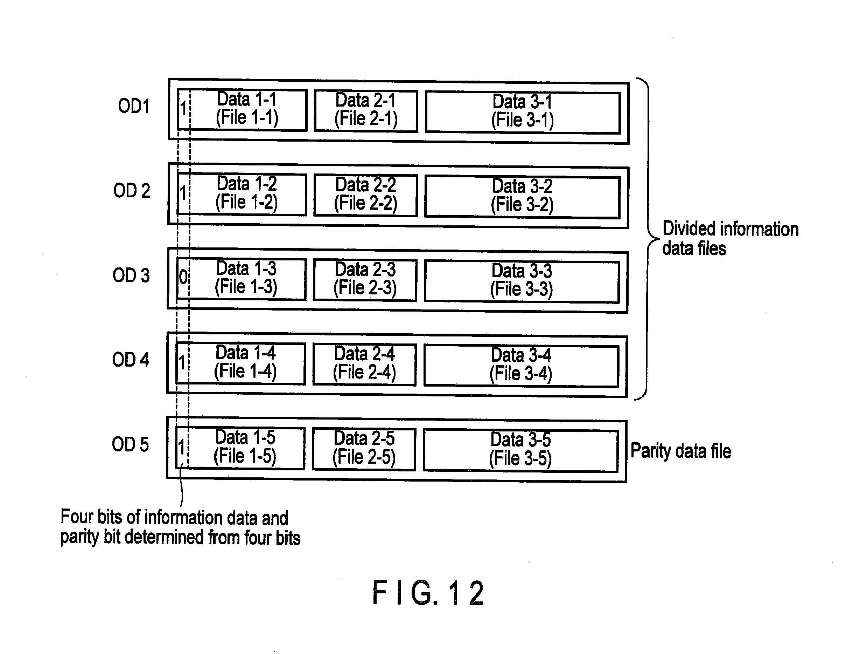

For example, as illustrated in FIG. 12, the information processing system (for example, the storage device 100) divides Data 1 into Data 1-1, Data 1-2, Data 1-3, and Data 1-4 of a predetermined recording unit. The information processing system also generates Data 1-5 (parity data file) from Data 1-1, Data 1-2, Data 1-3, and Data 1-4, and records Data 1-1, Data 1-2, Data 1-3, Data 1-4, and Data 1-5 on corresponding regions of the respective optical discs OD1 to OD5. For example, a parity bit is obtained from an exclusive OR operation result of respective bits of Data 1-1, Data 1-2, Data 1-3, and Data 1-4, and the parity bit is simultaneously recorded on optical disc OD5.

In the same manner, the information processing system divides Data 2 into Data 2-1, Data 2-2, Data 2-3, and Data 2-4. The information processing system also generates Data 2-5 (parity data file) from Data 2-1, Data 2-2, Data 2-3, and Data 2-4, and records Data 2-1, Data 2-2, Data 2-3, Data 2-4, and Data 2-5 on corresponding regions of the respective optical discs OD1 to OD5.

In the same manner, the information processing system divides Data 3 into Data 3-1, Data 3-2, Data 3-3, and Data 3-4. The information processing system also generates Data 3-5 (parity data file) from Data 3-1, Data 3-2, Data 3-3, and Data 3-4, and records Data 3-1, Data 3-2, Data 3-3, Data 3-4, and Data 3-5 on corresponding regions of the respective optical discs OD1 to OD5.

Next, the outline of medium processing (such as determination as to whether the data is authentic or inauthentic) performed by the information processing system will be explained hereinafter.

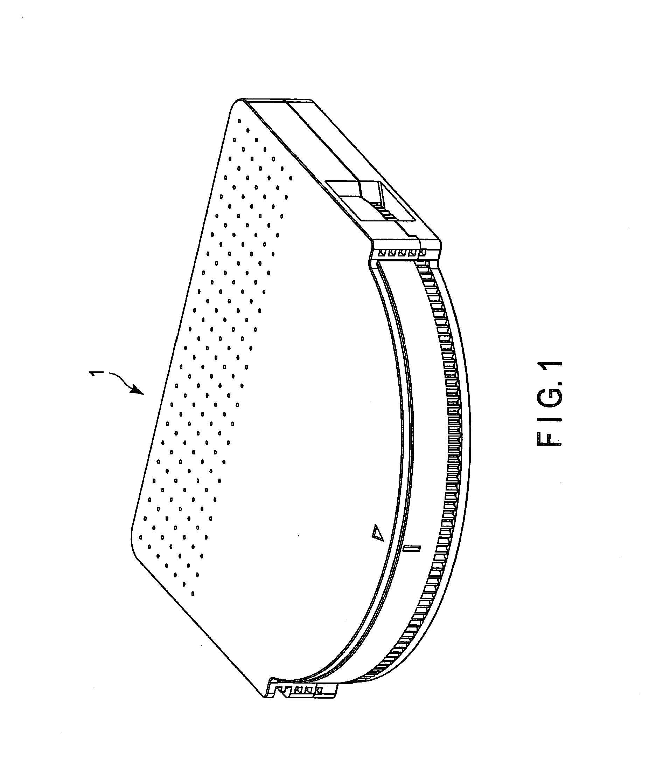

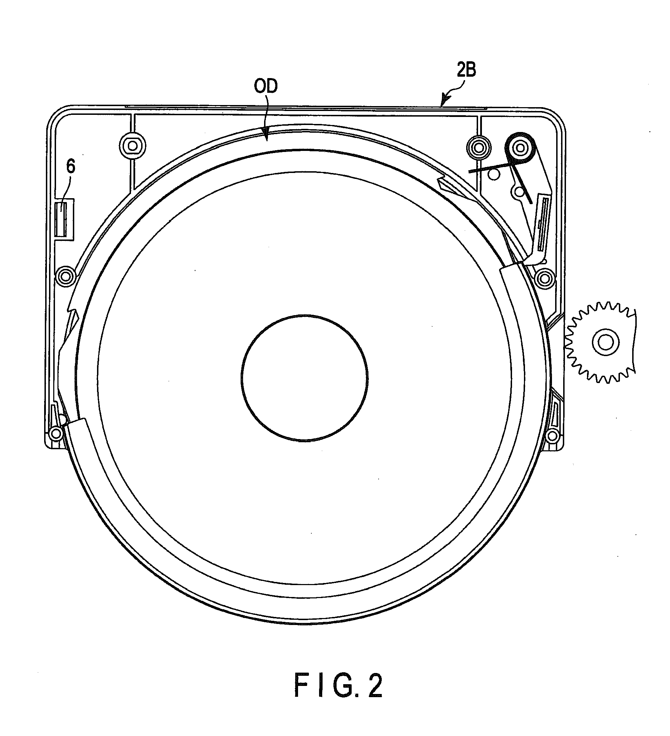

FIG. 1 is an outside drawing of a cassette of the archive optical disc drive (the above storage device 100). FIG. 2 illustrates the interior of the cassette, with an upper cover thereof removed. There is a space between a tray which receives a direct-read after-write optical disc OD and an outer shell 2B, and a radiofrequency identification (RFID) 6 is provided in part of the space.

An RFID reader is provided in a position of the changer, in which the cassette is loaded and which is close to the RFID of FIG. 2. The RFID reader reads data of the RFID.

Supposing that the RFID is a read-only or write-once RFID (information recording module), the RFID of the cassette 1 includes a cassette ID1, which is identification information unique to the cassette 1, and medium IDs, medium ID1 to medium ID5, which are identification information items of the five optical discs OD1 to OD5 that are contained in the cassette 1. Optical disc OD1 records the medium ID1 and the cassette ID1, optical disc OD2 records medium ID2 and the cassette ID1, optical disc OD3 records medium ID3 and the cassette ID1, optical disc OD4 records medium ID4 and the cassette ID1, and optical disc OD5 records medium ID5 and the cassette ID1. After they are recorded, the cassette 1 which contains optical discs OD1 to OD5 is shipped. To guarantee uniqueness of each cassette, each cassette ID is different from others. There are cases where the management server of the cassette management center manages information (cassette ID) of each cassette.

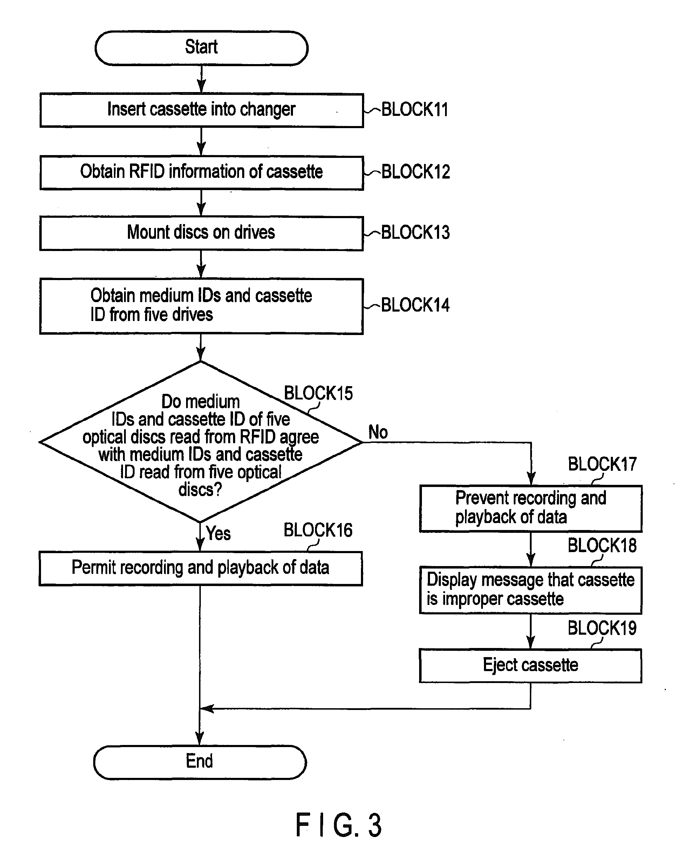

Next, the way of using the cassette will be explained hereinafter with reference to the flowchart of FIG. 3.

When the cassette is inserted into an insertion port of the changer (storage device 100) (BLOCK 11), the changer places the cassette in a cassette placing position. The changer (RFID reader) reads the RFID (cassette ID1 and medium ID1 to medium ID5) (BLOCK 12). Next, the changer takes the five optical discs out of the cassette, moves the optical discs to the five drives 01 to D5 (BLOCK 13), and reads medium ID1 to medium ID5 and the cassette ID1, which are recorded on the respective optical discs OD1 to OD5 (BLOCK 14).

Next, when the RFID, which is cassette information, includes medium ID1 to medium ID5 that have been read from the five optical discs and the cassette ID1 which has been read from the five optical discs, the computer 200 (main control module 30) determines that the cassette is a proper cassette which contains discs that were put into the cassette prior to shipping.

Specifically, the computer 200 (main control module 30) compares the five medium IDs, medium ID1 to medium ID5, that have been read from the RFID with medium ID1 to medium ID5 that have been read from the five optical discs, to determine whether the five medium IDs, medium ID1 to medium ID5, read from the RFID agree with medium ID1 to medium ID5 read from the five discs, and compares the cassette ID1 that has been read from the RFID with the cassette IDs which have been read from the five discs, to determine whether the cassette ID1 read from the RFID agrees with the cassette IDs read from the five discs. When the five medium IDs, medium ID1 to medium ID5, read from the RFID agree with medium ID1 to medium ID5 read from the five discs, and the cassette ID1 read from the RFID agrees with the cassette IDs read from the five discs (BLOCK 15, YES), the computer 200 determines that the cassette is a proper cassette which contains discs that were put into the cassette prior to shipping, and permits the information processing system to perform at least one of information playback from optical discs OD1 to OD5 contained in the cassette and information recording on optical discs OD1 to OD5. For example, the computer 200 may permit the information processing system to perform only information playback, or both the information playback and information recording (division recording of data on the five optical discs) (BLOCK 16).

When the computer 200 determines that the cassette is a proper cassette, the computer 200 instructs the changer to play back information, based on an information playback input, and the changer plays back information from optical discs OD1 to OD5 contained in the cassette. As another example, when the computer 200 determines that the cassette is a proper cassette, the computer 200 instructs the changer to record information, based on an information recording input, and the changer records information on optical discs OD1 to OD5 contained in the cassette.

When the RFID, which is cassette information, does not include medium ID1 to medium ID5 which have been read from the five discs, or when the RFID does not include the cassette ID1 which has been read from the five discs, the computer 200 (main control module 30) determines that the cassette is an improper cassette.

Specifically, when the five medium IDs, medium ID1 to medium ID5, read from the RFID do not agree with medium ID1 to medium ID5 read from the five discs, or the cassette ID1 read from the RFID does not agree with the cassette IDs read from the five discs (BLOCK 15, NO), the computer 200 (main control module 30) determines that the cassette is an improper cassette, and prevents the information processing system from performing at least one of information playback from optical discs OD1 to OD5 contained in the cassette and information recording on optical discs OD1 to OD5. For example, the computer 200 may prevent only information playback, or both the information playback and information recording (division recording of data for the five optical discs) (BLOCK 17).

In addition, the computer 200 prevents recording and playback of the discs, and displays on the display a message that the discs are inauthentic discs. The changer also displays on the display a message that the discs are inauthentic discs, and ejects the cassette.

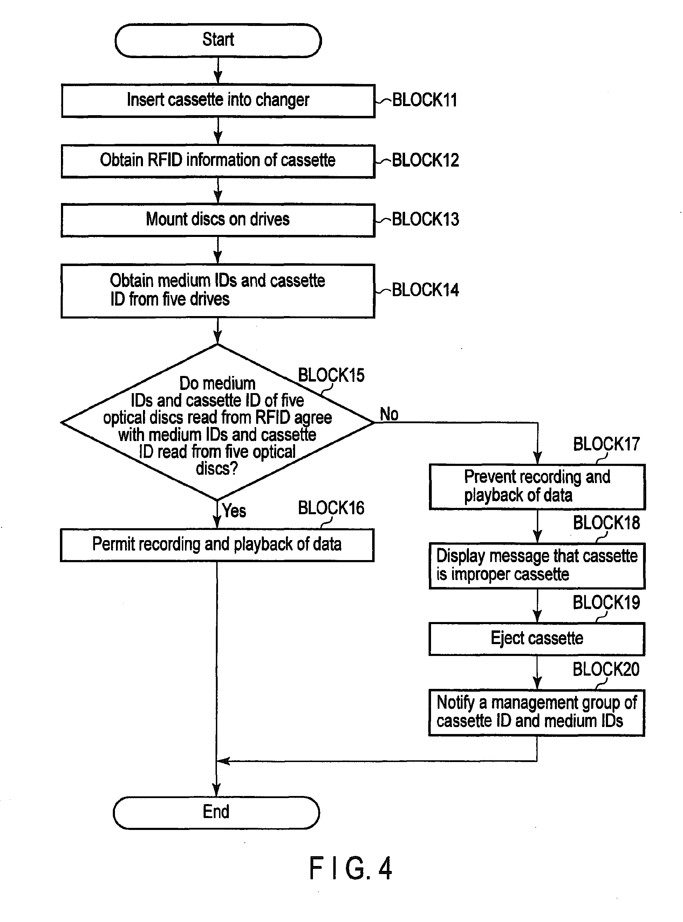

Besides, when it is determined that recording and playback are prevented in the same method as the flowchart of FIG. 3, the changer device may encode information of the cassette ID1 and five medium IDs, medium ID1 to medium ID5, which are determined as inauthentic, and notify the management server 300 of the cassette management center of the information through the Internet (Block 20 of FIG. 4).

In the case of using a read-only RFID, information of the RFID cannot be rewritten after shipping, and thus it is proved that the cassette is authentic.

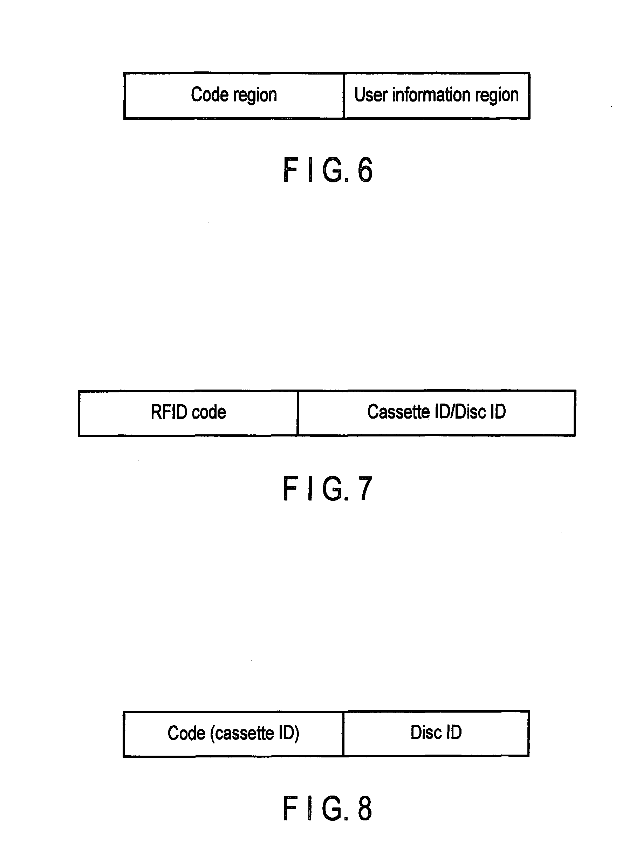

FIG. 6 is a diagram illustrating an example of format of the RFID. The RFID includes a code region which is assigned when the RFID is manufactured and cannot be rewritten by the user, and a user information region which can be rewritten by the user. For example, as illustrated in FIG. 7, an RFID in which the code region includes an RFID code and the user information region includes a cassette ID and disc IDs is referred to as "rewritable RFID". As another example, as illustrated in FIG. 8, an RFID in which the code region includes a cassette ID that is the same as the RFID code and the user information region includes disc IDs is referred to as "read-only RFID".

As described above, according to the information processing system of the present embodiment, it is possible to use cassettes with ease. For example, when a cassette which contains discs other than original discs is loaded into the changer, the information processing system can determine that the cassette is an improper cassette. Thereby, information playback for an improper cassette can be prevented.

It is also possible to notify the management server 300 of the management center of improper cassette information (cassette ID and medium IDs). In addition, the management server 300 can register medium IDs which are included in the improper cassette information in an inauthentic media list, and exclude optical discs of medium IDs that are registered in the inauthentic media list from an authentic media list (management list).

Besides, since the RFID can identify the cassette, when the cassette is taken out of the changer and stored in shelves, it is possible to manage the shelves with the RFID, and find a desired cassette in the shelves by retrieving the cassette with the RFID.

In the case where the disc is a disc which is not rewritable, such as DVD-R, DVD+R, and BD-R, even when data is erased by using Windows Explorer, data on the disc physically remains, and it can be easily found that the data was rewritten, as well as whether the discs are shipped authentic discs or not. Therefore, it can be easily proved that the data is original data.

The above explanation is made on the supposition that the RFID is not rewritable. Next, the case of using a rewritable RFID will be explained hereinafter.

The cassette ID1 which is identification information unique to the cassette and the medium IDs which are identification information items of optical discs contained in the cassette are encoded and recorded on a rewritable RFID. In addition, the cassette ID1 as well as medium ID1 to medium ID5, is recorded on the five optical discs OD1 to OD5 prior to shipping. Also in this case, to guarantee uniqueness of the cassette, the management server 300 of the cassette management center manages cassette IDs which are different between cassettes.

The following is explanation as to how to use the cassette.

When the cassette is inserted into the insertion port of the changer, the changer places the cassette in the cassette placing position. The changer (RFID reader) reads the RFID (encoded cassette ID1 and encoded medium IDs, medium ID1 to medium ID5), and decodes the encoded cassette ID1 and the encoded medium IDs, medium ID1 to medium ID5. The decoding key is stored in the changer, and not open to the public. Next, the changer takes the five optical discs OD1 to OD5 from the cassette, moves optical discs OD1 to OD5 to the five drives D1 to D5, and reads medium ID1 to medium ID5 and the cassette ID1 which are recorded on the respective optical discs OD1 to OD5.

Then, when the RFID, which is cassette information, includes medium ID1 to medium ID5 that are read from the five discs and the cassette ID1 that is read from the five discs, the computer 200 (main control module 30) determines that the cassette is a proper cassette which contains the shipped optical discs.

Specifically, the computer 200 (main control module 30) compares the five medium IDs, medium ID1 to medium ID5, that have been read from the RFID with medium ID1 to medium ID5 that have been read from the five optical discs, to determine whether the five medium IDs, medium ID1 to medium ID5, read from the RFID agree with medium ID1 to medium ID5 read from the five discs, and compares the cassette ID1 which has been read from the RFID with the cassette ID which has been read from the five discs, to determine whether the cassette ID1 read from the RFID agrees with the cassette ID read from the five discs. When the five medium IDs, medium ID1 to medium ID5, read from the RFID agree with medium ID1 to medium ID5 read from the five discs and the cassette ID1 read from the RFID agrees with the cassette ID read from the five discs, the computer 200 determines that the cassette is a proper cassette which contains discs that were put into the cassette prior to shipping, and permits at least one of information playback from optical discs OD1 to OD5 contained in the cassette and information recording on optical discs OD1 to OD5.

When the RFID, which is cassette information, does not include medium ID1 to medium ID5 which are read from the five discs, or when the RFID does not include the cassette ID1 which is read from the five discs, the computer 200 (main control module 30) determines that the cassette is an improper cassette.

Specifically, when the five medium IDs, medium ID1 to medium ID5, read from the RFID do not agree with medium ID1 to medium ID5 read from the five discs, or the cassette ID1 read from the RFID does not agree with the cassette ID read from the five discs, the computer 200 (main control module 30) determines that the cassette is an improper cassette, and prevents at least one of information playback from optical discs OD1 to OD5 contained in the cassette and information recording on optical discs OD1 to OD5.

Next, the following is explanation of the case where the management server of the management center determines whether the cassette is a proper cassette or an improper cassette.

The cassette ID1 which is identification information unique to the cassette is encoded and recorded on a rewritable RFID. In addition, medium ID1 to medium ID5 are recorded on the five optical discs OD1 to OD5, respectively, and thereafter the cassette is shipped. The management server 300 stores an authentic media list (management list) which includes the cassette ID1 and medium ID1 to medium ID5.

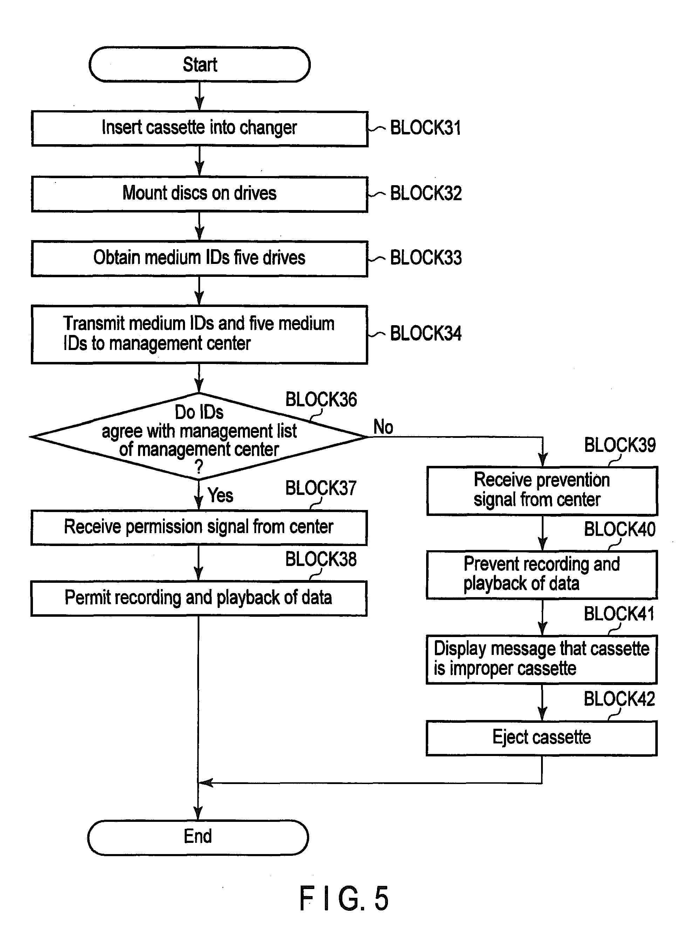

The process will be explained with reference to the flowchart of FIG. 5.

When the cassette is put into the insertion port of the changer (storage device 100) (BLOCK 31), the changer places the cassette in the cassette placing position. The changer (RFID reader) reads the RFID (cassette ID1) of the cassette. Then, the changer takes the five optical discs OD1 to OD5 from the cassette, moves optical discs OD1 to OD5 to the five drives D1 to D5 (BLOCK 32), and reads medium ID1 to medium ID5 which are recorded on the respective optical discs OD1 to OD5 (BLOCK 33).

Next, the computer 200 transmits the encoded cassette ID1 which has been read from the RFID and medium ID1 to medium ID5 which have been read from the five discs to the management server 300 (BLOCK 34).

The management server 300 receives the encoded cassette ID1 and medium ID1 to medium ID5, decodes the received cassette ID1, and compares the decoded cassette ID1 and medium ID1 to medium ID5 with the authentic media list. When the authentic media list includes the cassette ID1 and medium ID1 to medium ID5 (when the authentic media list includes data which correlates the cassette ID1 with medium ID1 to medium ID5), the management server 300 determines that the cassette is a proper cassette.

Specifically, the management server 300 compares the received cassette ID1 and medium ID1 to medium ID 5 with the cassette ID1 and medium ID1 to medium ID5 which are included in the authentic media list. When the received cassette ID1 and medium ID1 to medium ID 5 agree with the cassette ID1 and medium ID1 to medium ID5 which are included in the authentic media list (BLOCK 36, YES), the management server 300 determines that the cassette is a proper cassette, and transmits proper cassette determination information to the computer 200. When the received cassette ID1 does not agree with the cassette ID1 included in the authentic media list, or when the received medium ID1 to medium ID5 do not agree with medium ID1 to medium ID5 included in the authentic media list, the management server determines that the cassette is an improper cassette, and transmits improper cassette determination information to the computer 200.

When the computer 200 receives proper cassette determination information (BLOCK 37), the computer 200 permits at least one of information playback from optical discs OD1 to OD5 contained in the cassette and information recording on optical discs OD1 to OD5. For example, the computer 200 may permit only information playback, or both the information playback and information recording (division recording of data for the five optical discs) (BLOCK 38).

When the computer 200 receives improper cassette determination information (BLOCK 39), the computer 200 prevents at least one of information playback from optical discs OD1 to OD5 contained in the cassette and information recording on optical discs OD1 to OD5. For example, the computer 200 may prevent only information playback, or both the information playback and information recording (division recording of data on the five optical discs) (BLOCK 40).

In addition, the computer 200 prevents recording and playback of the discs, and displays on the display that the discs are inauthentic discs. The changer also displays on the display that the discs are inauthentic discs (BLOCK 41), and ejects the cassette (BLOCK 42).

The following is explanation of the case of adopting a rewritable optical disc.

Although data can be rewritten in rewritable optical discs, the information processing system of the present embodiment treats rewritable optical discs as direct-read after-write optical discs. When information which was recorded once becomes unnecessary, the information processing system formats the optical discs contained in the cassette all together, records the format date and time information on the optical discs, and guarantees data recorded on and after the format date and time as original data.

Although optical discs contained in the cassette are rewritable optical discs, the structure of the cassette is the same as FIG. 1 and FIG. 2.

The changer formats the optical discs contained in the cassette when the cassette is first used. When the changer formats the optical discs contained in the cassette based on instructions from the user, the changer encodes the format data and time information and records the information on the management regions of the optical discs, simultaneously with format of the optical discs.

The changer records data on the rewritable optical discs and erases data recorded on the optical discs based on instructions from the user. Recording and erase of data is performed by substantially the same method as that of direct-read after-write optical discs. Specifically, when data is rewritten, the changer records erase information with the data on the disc left, and records rewriting data on another free space. By performing the above process, it is possible to perform processing in the same manner as direct-read after-write optical discs.

In addition, based on format instructions from the user, the changer initializes the discs. New format date and time information is recorded on the discs, and data recorded on and after the date and time is recognized as original data.

The computer 200 transmits the format date and time information to the management server 300 of the management center, in addition to the cassette ID and disc IDs. The management server 300 can determine whether the cassette is a proper cassette or not, and can understand the period for which the original data is guaranteed.

According to the above structure, it is possible to provide a storage medium, for which the cassette can be used at ease as a proper cassette that is universally unique without copying or fraudulence, at the time when the cassette is inserted into the changer.

It is also possible to exclude a cassette which is suspected to be an improper cassette from the authentic media list.

Even rewritable optical discs have a rewritable region and a non-rewritable region. For example, the non-rewritable region (BCA) stores the disc ID, and the rewritable region stores the cassette ID. The cassette ID which is stored in the rewritable region can be encoded data to prevent fraud.

Usually, the optical discs which are contained in the cassette explained above cannot be taken out of the cassette by the user. However, the user who has a detailed knowledge of the structure of the cassette, or the user who intends to perform fraudulent behavior, may take the optical discs out of the cassette. When the user takes the original optical discs out of the cassette, and puts other optical discs prepared by the user into the cassette, data of the original discs is replaced by data of the other optical discs. According to the embodiment, when such replacement of optical discs is performed by any chance, it is possible to determine that the cassette is an improper cassette.

The following is a summary of the embodiment.
(1) Each of the optical discs includes a region which stores a medium ID that is identification information unique to the optical disc and a cassette ID that is identification information unique to the cassette. The cassette includes an RFID which stores medium IDs that are identification information items unique to the respective optical discs and the cassette ID that is identification information unique to the cassette. The information recorded on the RFID is not rewritable after shipping. When a set of the cassette ID and the medium IDs recorded on the RFID agree with the cassette ID and the medium IDs recorded on the discs, the information processing system determines that the cassette is a proper cassette, and permits the changer to perform recording and playback of the optical discs. When they do not agree, the information processing system determines that the cassette is an improper cassette, and does not permit the changer to perform recording and playback of the optical discs.
(2) Each of the optical discs includes a region which stores a medium ID that is identification information unique to the optical disc and a cassette ID that is identification information unique to the cassette. The cassette includes an RFID which stores encoded medium IDs that are identification information items unique to the respective optical discs and the encoded cassette ID that is identification information unique to the cassette. The information recorded on the RFID is rewritable after shipping. When data is recorded or played back, the information processing system decodes a set of the cassette ID and the medium IDs recorded on the RFID. When the set of the cassette ID and the mediums IDs recorded on the RFID agree with the cassette ID and the medium IDs recorded on the discs, the information processing system determines that the cassette is a proper cassette, and permits the changer to perform recording and playback of the optical discs. When they do not agree, the information processing system determines that the cassette is an improper cassette, and does not permit the changer to perform recording and playback of the optical discs.
(3) Each of the optical discs includes a region which stores a medium ID that is identification information unique to the optical disc. The cassette includes an RFID which stores an encoded cassette ID that is identification information unique to the cassette. The information recorded on the RFID is rewritable after shipping. When data is recorded or played back, the information processing system transmits the cassette ID recorded on the RFID and the medium IDs recorded on the discs to the management server. The management server decodes the cassette ID and stores the shipping management list (authentic media list). The management server checks the cassette ID and the medium IDs with the cassette ID and the medium IDs transmitted from the information processing system. When they agree, the management server determines that the cassette is a proper cassette, and transmits permission information to permit the information processing system recording and playback of the information. When they do not agree, the management server determines that the cassette is an improper cassette, and transmits prevention information to prevent recording and playback of the information. When permission information is received, the information processing system executes recording and playback. When prevention information is received, the information processing system does not execute recording and playback.
(4) In the above items (1) and (2), the information processing system notifies the management server of determination that the cassette is an improper cassette, based on the improper cassette determination.
(5) In the above items (1), (2), (3), and (4), rewritable optical discs are used. The information processing system formats the optical discs contained in the cassette all together, encodes the format date and time information, and stores the format date and time information in the optical discs.

According to at least one of the above embodiments, it is possible to provide a medium processing method a cassette to safely manage original data.

## Claims

1. A medium processing method **characterized by** comprising:
reading (BLOCK 14) first medium identification information and cassette identification information from a first medium wherein a cassette comprises the first medium comprising the first medium identification information and the cassette identification information;
reading (BLOCK 12) cassette information from the cassette; and
determining (BLOCK 15) the first medium as authentic, when the cassette information comprises the first medium identification information and the cassette identification information.

2. The method of Claim 1, **characterized by** comprising:
reading (BLOCK 14) medium identification information and the cassette identification information from all of media contained in the cassette;
reading (BLOCK 12) the cassette information from the cassette; and
determining (BLOCK 15) the cassette contained media as authentic, when the cassette information comprises the medium identification information and the cassette identification information of all of the media.

3. The method of Claim 2, **characterized by** comprising:
reading (BLOCK 12) the cassette information which is encoded and recorded on a rewritable region of the cassette;
decoding (BLOCK 12) the encoded cassette information; and
determining (BLOCK 15) the cassette contained media as authentic, when the decoded cassette information includes the medium identification information and the cassette identification information of all of the media.

4. The method of Claim 1, **characterized by** comprising:
permitting (BLOCK 16) at least one of information recording on the cassette contained medium and information playback from the medium, based on authenticity determination.

5. The method of Claim 1, **characterized by** comprising:
determining (BLOCK 15) the cassette contained medium as inauthentic, when the cassette information does not comprise at least one of the medium identification information and the cassette identification information of all of the media.

6. The method of Claim 5, **characterized by** comprising:
notifying (BLOCK 20) inauthenticity determination.

7. A medium processing method **characterized by** comprising:
reading first medium identification information from a first medium wherein a cassette comprises the first medium;
reading cassette identification information stored in the cassette;
transmitting the first medium identification information and the cassette identification information to a server;
receiving authenticity determination or inauthenticity determination based on the first medium identification information and the cassette identification information from the server; and
permitting at least one of information recording on the medium and information playback from the medium, based on the authenticity determination.

8. The method of Claim 7, **characterized in that**:
the server receives the first medium identification information and the cassette identification information, and transmits the authenticity determination when an authentic media list comprises the first medium identification information and the cassette identification information.

9. The method of Claim 7, **characterized by** comprising:
reading medium identification information recorded on all media contained in the cassette;
transmitting the medium identification information of all of the media and the cassette identification information to the server; and
receiving the authenticity determination or the inauthenticity determination based on the medium identification information of all of the media and the cassette identification information from the server.

10. The method of Claim 9, **characterized by** comprising:
receiving all of the medium identification information and the cassette identification information, and transmitting the authenticity determination when the authentic media list includes all of the medium identification information and the cassette identification information.

11. The method of Claim 1, **characterized by** comprising:
recording encoded format date and time information on a rewritable region of the first medium, based on a format instruction.

12. The method of Claim 7, **characterized by** comprising:
recording encoded format date and time information on a rewritable region of the first medium, based on a format instruction.

13. A cassette **characterized by** comprising a first medium comprising first medium identification information and cassette identification information, wherein
the cassette stores cassette information comprising the first medium identification information and the cassette identification information.

14. The cassette of Claim 13, **characterized in that**
the cassette comprises the first medium.

15. The cassette of Claim 13, **characterized in that**
the cassette comprises the cassette information comprising medium identification information recorded on all of media in the cassette and the cassette identification information.

16. The cassette of Claim 14, **characterized in that**
the cassette comprises all of the media.

17. An RFID of a cassette **characterized by** comprising a first medium comprising first medium identification information and cassette identification information, wherein
the RFID comprises the first medium identification information and the cassette identification information.

18. The RFID of Claim 17, **characterized in that** the cassette comprises all of media, each of which stores medium identification information and cassette identification information, and the RFID comprises the medium identification information and the cassette identification information of all of the media.
